# EUROPEAN PATENT APPLICATION

(11) **EP 4 224 591 A1**
(43) Date of publication of application: **09.08.2023**
(21) Application number: 22856261.7
(22) Date of filing: 11.08.2022
(51) Int. Cl.: H01M 10/0585, H01M 10/52, H01M 50/449, H01M 50/46, H01M 50/403

(54) **CELL FOR SECONDARY BATTERY AND METHOD FOR MANUFACTURING SAME**

(30) Priority: 11.08.2021 KR 20210106329
(71) Applicant: LG Energy Solution, Ltd., Seoul 07335 (KR)
(72) Inventor: HWANG, Gyu-Ok, Daejeon 34122 (KR)
(74) Representative: Hoffmann Eitle
(86) International application number: PCT/KR2022/012060
(87) International publication number: WO 2023/018268

(57) **Abstract**

The present disclosure relates to a cell for a secondary battery and a method for manufacturing the same. The cell for a secondary battery includes at least one negative electrode and at least one positive electrode stacked alternately with a separator interposed therebetween, wherein at least one separator is provided with a plurality of coated portions formed on at least one surface thereof while being spaced apart from one another, and the coated portion includes a mixture of a gas adsorbent and an adhesive binder. According to the cell for a secondary battery and method for manufacturing the same, it is possible to minimize gases trapped in the cell of the secondary battery and to ensure the adhesion between the separator and the electrodes.

## Description

### TECHNICAL FIELD

The present disclosure relates to a cell for a secondary battery and a method for manufacturing the same.

The present application claims priority to Korean Patent Application No. 10-2021-0106329 filed on August 11, 2021 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, secondary batteries having high energy density have been focused.

Typically, in terms of the shape of a battery, prismatic batteries and pouch-type batteries applicable to products, such as cellular phones, having a small thickness are increasingly in demand. In terms of materials, lithium secondary batteries having high energy density, discharge voltage and output stability are increasingly in demand.

In general, a secondary battery is manufactured through an assembling step, an activation step, or the like. In the assembling step, a negative electrode, a positive electrode and a separator are stacked, an electrolyte is injected thereto, and a battery casing is sealed. The activation step includes carrying out processing, such as charge/discharge, under the condition required for activation. In the activation step, a large amount of gases is generated inside of the secondary battery.

If the generated gases are not removed, they are trapped in the secondary battery and occupy a certain space. Therefore, the secondary battery is swelled at the central portion thereof, thereby causing deformation of the battery and adversely affecting the performance, such as capacity and output, and life of the battery.

To remove the gases generated in the activation step of the secondary battery, the secondary battery is generally subjected to a degassing process which includes opening the battery casing to discharge the gases, and then sealing the gas discharge portion through hot fusion. However, even after the secondary battery is subjected to a degassing step, residual gases trapped and remaining in the secondary battery are still present. Particularly, since it is difficult to discharge the gases from the central portion of the secondary battery in the thickness direction, degassing requires a long period of time, and the gases cannot be discharged sufficiently through the degassing step, undesirably.

### DISCLOSURE

### Technical Problem

The present disclosure is designed to solve the problems of the related art, and therefore the present disclosure is directed to providing a cell for a secondary battery in which gases trapped therein are minimized by adsorbing the gases generated in the secondary battery and discharging the non-adsorbed gases to the outside, and a method for manufacturing the same.

The present disclosure is also directed to providing a cell for a secondary battery which can ensure the adhesion between an electrode and a separator, and a method for manufacturing the same.

It will be easily understood that the objects and advantages of the present disclosure may be realized by the means shown in the appended claims and combinations thereof.

### Technical Solution

The inventors of the present disclosure have found that the cell for a secondary battery and method for manufacturing the same as described hereinafter can solve the above-mentioned problems.

According to the first embodiment of the present disclosure, there is provided a cell for a secondary battery, including at least one negative electrode and at least one positive electrode stacked alternately with a separator interposed therebetween,
wherein at least one separator includes a plurality of coated portions formed on at least one surface thereof while being spaced apart from one another, and
the coated portion includes a mixture of a gas adsorbent and an adhesive binder.

According to the second embodiment of the present disclosure, there is provided the cell for a secondary battery as defined in the first embodiment, wherein the gas adsorbent includes a silica gel, a carbon fiber, a porous carbonaceous material, a porous metal oxide, a porous gel, a zeolite, or two or more of them.

According to the third embodiment of the present disclosure, there is provided the cell for a secondary battery as defined in the first or the second embodiment, wherein the adhesive binder includes polyvinylidene fluoride, styrene butadiene rubber, polytetrafluoroethylene, polyethylene glycol, polypropylene glycol, toluene diisocyanate, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, polyimide, or two or more of them.

According to the fourth embodiment of the present disclosure, there is provided the cell for a secondary battery as defined in any one of the first to the third embodiments, wherein the coated portions formed on at least one surface of the separator while being spaced apart from one another have a total area of 20-50% based on 100% of the total area of the surface of the separator.

According to the fifth embodiment of the present disclosure, there is provided the cell for a secondary battery as defined in any one of the first to the fourth embodiments, wherein the coated portions formed on at least one surface of the separator while being spaced apart from one another have an interval of 1-20 mm.

According to the sixth embodiment of the present disclosure, there is provided the cell for a secondary battery as defined in any one of the first to the fifth embodiments, wherein the separator provided with the coated portions is disposed at the central portion in the thickness direction of the cell for a secondary battery.

According to the seventh embodiment of the present disclosure, there is provided a method for manufacturing a cell for a secondary battery, including the steps of:
(S1) stacking at least one positive electrode and at least one negative electrode alternately with a separator interposed therebetween to assemble a cell for a secondary battery; and
(S2) rolling the surface of the cell for a secondary battery at least once simultaneously with pressurization by using a roller,
wherein at least one separator includes a plurality of coated portions formed thereon while being spaced apart from one another by coating a mixture of a gas adsorbent and an adhesive binder on at least one surface of the separator.

According to the eighth embodiment of the present disclosure, there is provided the method for manufacturing a cell for a secondary battery as defined in the seventh embodiment, wherein the coated portion is coated by spray coating the mixture of a gas adsorbent and an adhesive binder.

According to the ninth embodiment of the present disclosure, there is provided the method for manufacturing a cell for a secondary battery as defined in the seventh or the eighth embodiment, wherein the gas adsorbent includes a silica gel, a carbon fiber, a porous carbonaceous material, a porous metal oxide, a porous gel, a zeolite, or two or more of them.

According to the tenth embodiment of the present disclosure, there is provided the method for manufacturing a cell for a secondary battery as defined in any one of the seventh to the ninth embodiments, wherein the separator provided with the coated portions is disposed at the central portion in the thickness direction of the cell for a secondary battery.

According to the eleventh embodiment of the present disclosure, there is provided the method for manufacturing a cell for a secondary battery as defined in any one of the seventh to the tenth embodiments, wherein step (S2) includes:
primarily rolling the surface of the cell for a secondary battery simultaneously with pressurization by using a roller; and
aging the primarily rolled cell for a secondary battery, and then secondarily rolling the surface of the cell for a secondary battery simultaneously with pressurization by using a roller.

According to the twelfth embodiment of the present disclosure, there is provided the method for manufacturing a cell for a secondary battery as defined in any one of the seventh to the eleventh embodiments, which further includes a degassing step after step (S2).

### Advantageous Effects

The cell for a secondary battery according to the present disclosure is provided with a plurality of coated portions including a gas adsorbent and an adhesive binder on at least one surface of the separator, and thus can adsorb gases generated in the secondary battery. In addition, the coated portions are formed while being spaced apart from one another, and thus non-absorbed gases may be discharged to the outside through the region having no coated portions. In this manner, the cell for a secondary battery according to the present disclosure can minimize gases trapped in the secondary battery and can prevent degradation of the performance and capacity of the secondary battery.

In addition, since the coated portions formed on at least one surface of the separator includes the adhesive binder, it is possible to ensure the adhesion between an electrode and the separator.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the cell for a secondary battery according to an embodiment of the present disclosure.
FIG. 2 is a schematic sectional view illustrating the separator provided with coated portions, included in the cell for a secondary battery according to an embodiment of the present disclosure.
FIG. 3 is a schematic sectional view illustrating a separator having a mesh-patterned coated portion, which does not fall within the scope of the present disclosure.
FIG. 4 shows the results of gases trapped in the cell for a secondary battery according to each of Examples and Comparative Examples, as determined by air scanner/full charge disassembly analysis.
FIG. 5 is a graph illustrating the results of electrical resistance of the cell for a secondary battery according to each of Examples and Comparative Examples, as determined by using electrochemical impedance spectroscopy (EIS).

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression `a part includes an element' does not preclude the presence of any additional elements but means that the part may further include the other elements.

The present disclosure relates to a cell for a secondary battery and a method for manufacturing the same.

### Cell for Secondary Battery

The cell for a secondary battery according to the present disclosure includes at least one negative electrode and at least one positive electrode stacked alternately with a separator interposed therebetween, wherein at least one separator is provided with a plurality of coated portions formed on at least one surface thereof while being spaced apart from one another, and the coated portion includes a mixture of a gas adsorbent and an adhesive binder.

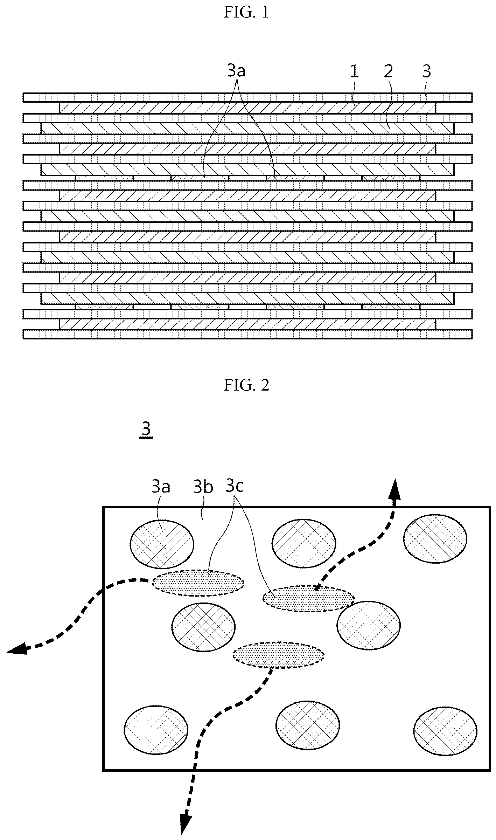

FIG. 1 is a schematic view illustrating the structure of the cell for a secondary battery. Referring to FIG. 1, a positive electrode 1 and a negative electrode 2 are stacked alternately with a separator 3 interposed therebetween, wherein at least one separator is provided with a plurality of coated portions 3a spaced apart from one another.

According to the present disclosure, the cell for a secondary battery includes at least one separator having a plurality of coated portions formed on at least one surface of the separator while being spaced apart from one another, and thus can adsorb gases generated in the secondary battery and discharge non-adsorbed gases to the outside of the secondary battery. In this manner, it is possible to minimize gases trapped in the secondary battery.

The coated portions are formed on at least one surface of the separator while being spaced apart from one another. Particularly, the coated portions may be formed in a pattern of a plurality of dots on one surface of the separator while being spaced apart from one another. For example, the dots may have a circular, oval or quadrangular shape, or the like. For example, when the dots have a spherical shape, they may have a diameter of about 1-10 mm. When the dots have an oval shape, they may have a short axis length of about 1-10 mm and a long axis length of about 2-12 mm. When the dots have a quadrangular shape, each of the width and length may be 1-10 mm. In addition, the coated portions formed on one surface of the separator while being spaced apart from one another may have an interval of 1-20 mm. The coated portions formed with a predetermined interval may have a surface area capable of adsorbing the gases in the secondary battery sufficiently and provide a space which allows the gases not adsorbed by each coated portion to be disposed in the non-coated portion as described hereinafter.

According to the present disclosure, the separator is provided with a non-coated portion from which the surface of at least one side of the separator is exposed. The non-coated portion is a portion having no coated portion on one surface of the separator. The non-coated portion may function as a gas discharge path through which the gases not adsorbed by the gas adsorbent in the coated portion may be discharged to the outside.

Particularly, as shown in FIG. 2, the separator 3 is provided with a plurality of coated portions 3a formed on at least one surface thereof while being spaced apart from one another, and a non-coated portion 3b having no coated portion. In the non-coated portion 3b, gases 3c not adsorbed by the coated portions 3a may be disposed.

In addition, the non-coated portion 3b may form a path through which the gases 3c in the secondary battery may be discharged to the outside of the secondary battery. For example, the gases 3c disposed in the non-coated portion 3b may be transferred along the path represented by the arrow mark and discharged to the outside. Such an optional path represented by the dotted arrow mark may be referred to as a gas discharge path.

Meanwhile, if the coated portions are formed on at least one surface of the separator while being interconnected with one another, the non-coated portion cannot provide a discharge path undesirably.

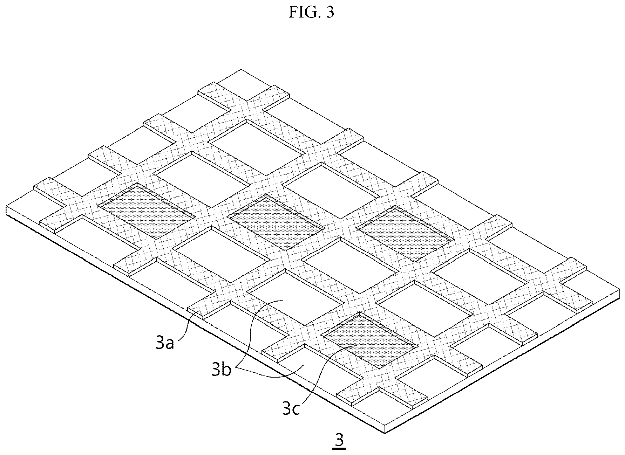

For example, as shown in FIG. 3, when the coated portions 3a are formed in a mesh-like pattern or a lattice-like pattern, the gases trapped in the secondary battery cannot be discharged to the outside. The coated portions 3a formed in a mesh-like pattern or a lattice-like pattern have a shape including a plurality of coated portions formed on the separator while being interconnected with one another, and thus the non-coated portion 3b is surrounded with the coated portions 3a. In this case, the non-coated portion 3b cannot function as a gas discharge path through which the gases are discharged to the outside. Therefore, the gases 3c trapped in the secondary battery and disposed in the non-coated portion 3b cannot be discharged to the outside, and thus the performance and capacity of the secondary battery are degraded undesirably.

According to the present disclosure, the coated portions formed on at least one surface of the separator while being spaced apart from one another may occupy 20-50% based on 100% of the total area of the surface of the separator. When the coated portions have the above-defined area, the coated portions can adsorb the gases generated in the secondary battery sufficiently, and the non-coated portion can provide a path through which the gases not adsorbed by the coated portions can be discharged.

According to the present disclosure, the coated portion includes a mixture of a gas adsorbent and an adhesive binder. In addition, the coated portion according to an embodiment of the present disclosure may further include a solvent or a dispersion medium used conventionally in the art, or the like.

In general, the gases generated in the secondary battery may include hydrogen (H₂), carbon monoxide (CO), carbon dioxide (CO₂), methane (CH₄), acetylene (C₂H₂), ethylene (C₂H₄), ethane (C₂H₆), propene (C₃H₆), propane (C₃H₈), or the like. Therefore, the gas adsorbent is not particularly limited in its type, as long as it is a material capable of adsorbing the gases generated in the secondary battery and having pores therein. For example, the gas adsorbent may be at least one selected from the group consisting of molecular sieves and metal ingredients having gas adsorption property.

Herein, the molecular sieves may include a silica gel, a carbon fiber, a porous carbonaceous material, a porous metal oxide, a porous gel, a zeolite, or two or more of them.

Herein, the porous carbonaceous material may be at least one selected from the group consisting of carbon molecular sieves and activated carbon, and the metal ingredient of the porous metal oxide may be at least one selected from the group consisting of zeolite, silica gel, alumina and molecular sieves.

In addition, the metal ingredient may be at least one selected from the group consisting of nickel (Ni), platinum (Pt), palladium (Pd), calcium (Ca), strontium (Sr), barium (Ba), thallium (Tl), zirconium (Zr), hafnium (Hf), vanadium (V), niobium (Nb), tantalum (Ta), chromium (Cr), molybdenum (Mo) and tungsten (W).

The content of the gas adsorbent may be 10-50 wt% based on the total weight of the coated portions. When the content of the gas adsorbent falls within the above-defined range, the gases may be adsorbed sufficiently by the gas adsorbent.

The adhesive binder is not particularly limited, as long as it can realize adhesion to an electrode. Particularly, the adhesive binder may include polyvinylidene fluoride, styrene butadiene rubber, polytetrafluoroethylene, polyethylene glycol, polypropylene glycol, toluene diisocyanate, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, polyimide, or two or more of them. For example, it is advisable to use polyvinylidene fluoride as an adhesive binder in order to realize adhesion to an electrode.

In addition, the content of the adhesive binder may be 10-50 wt% based on the total weight of the coated portions. When the content of the adhesive binder falls within the above-defined range, the adhesive binder can function as a binder which prevents the gas adsorbent from being separated from the separator, while realizing adhesion to an electrode sufficiently.

According to the present disclosure, the coated portions formed on at least one surface of the separator while being spaced apart from one another may be coated to a thickness of 0.1-10 µm, particularly 0.5-10 µm, but is not limited thereto. When the thickness of the coated portions falls within the above-defined range, it is possible to ensure a discharge path for non-adsorbed gases, while not causing a significant increase in cell thickness. It is also possible to ensure sufficient adhesion to an electrode.

According to the present disclosure, the separator contained in the cell for a secondary battery functions to insulate the positive electrode and the negative electrode from each other and to provide a lithium-ion channel. Any separator may be used with no particular limitation, as long as it is used conventionally as a separator for a secondary battery.

Particularly, the separator may include a porous polymer film, such as a porous polymer film made of a polyolefin-based polymer, including ethylene homopolymer, propylene homopolymer, ethylene/butene copolymer, ethylene/hexene copolymer, ethylene/methacrylate copolymer, or the like, or a laminate structure of two or more layers of them. It is also possible to use a conventional porous nonwoven web, such as a nonwoven web made of high-melting point glass fibers, polyethylene terephthalate fibers, or the like.

In addition, in order to ensure heat resistance or mechanical strength, a separator coated with inorganic particles, a binder polymer or a mixture of inorganic particles with a binder polymer may be used, optionally in a single layer structure or a multilayer structure. Further, when using a solid electrolyte, such as polymer, as an electrolyte, the solid electrolyte may also function as a separator.

According to the present disclosure, the separator including a plurality of coated portions formed on at least one surface thereof while being spaced apart from one another may be stacked at any position in the cell for a secondary battery. However, the separator may be stacked preferably at a position having a difficulty in discharging gases.

Particularly, the cell for a secondary battery has a laminate structure including the electrodes and separator stacked successively, and thus it is more difficult for the central portion of the cell in the thickness direction to discharge gases, as compared to the outermost part of the cell. Therefore, in order to reduce the amount of the gases trapped in the central portion of the cell for a secondary battery in the thickness direction, the cell may include a separator provided with the coated portions at the central portion in the thickness direction thereof. For example, in a cell for a secondary battery including three or more separators, at least one separator among the remaining separators, except the separators disposed at the upper and lower outermost parts, may be provided with the coated portions.

In addition, the cell may include a separator provided with the coated portions in any position other than the central portion, together with the separator disposed at the central portion. For example, the term `central portion' may refer to the central portion of the cell when the cell is divided into three parts in the thickness direction thereof, or the central portion of the cell when the cell is divided into five parts in the thickness direction thereof.

The positive electrode contained in the cell for a secondary battery according to the present disclosure may be obtained by applying a mixture of a positive electrode active material, a conductive material and a binder onto a positive electrode current collector, followed by drying. If necessary, the mixture may further include a filler.

The positive electrode active material may include: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiVsOs, LiV₃O₄, V₂O₅ or C_{U2}V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; and Fe₂(MoO₄)₃; or the like. However, the scope of the present disclosure is not limited thereto.

The positive electrode current collector is formed to have a thickness of 3-500 µm. The positive electrode current collector is not particularly limited, as long as it causes no chemical change in the corresponding battery and has high conductivity. Particular examples of the positive electrode current collector may include stainless steel, aluminum, nickel, titanium, baked carbon, aluminum or stainless steel surface-treated with carbon, nickel, titanium or silver, or the like. In addition, fine surface irregularities may be formed on the surface of the positive electrode current collector to enhance the adhesion with the positive electrode active material. The positive electrode current collector may have various shapes, including a film, a sheet, a foil, net, a porous body, a foam, a nonwoven web, or the like.

The conductive material is generally added in an amount of 1-50 wt% based on the total weight of the mixture including the positive electrode active material. The conductive material is not particularly limited, as long as it has conductivity while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive polymer such as a polyphenylene derivative; or the like.

The binder is an ingredient which assists binding between the active material and the conductive material and binding to the current collector. In general, the binder may be added in an amount of 1-50 wt% based on the total weight of mixture including the positive electrode active material. Particular examples of the binder include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene-butadiene rubber, fluoro-rubber, various copolymers, or the like.

The filler is an ingredient inhibiting the positive electrode from swelling and is used optionally. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

The negative electrode contained in the cell for a secondary battery according to the present disclosure may be obtained by applying a negative electrode material onto a negative electrode current collector, followed by drying. If necessary, the negative electrode material may further include the above-described ingredients.

The negative electrode current collector is formed to have a thickness of 3-500 µm. The negative electrode current collector is not particularly limited, as long as it causes no chemical change in the corresponding battery and has high conductivity. Particular examples of the negative electrode current collector may include copper, stainless steel, aluminum, nickel, titanium, baked carbon, copper or stainless steel surface-treated with carbon, nickel, titanium or silver, aluminum-cadmium alloy, or the like. In addition, similarly to the positive electrode current collector, fine surface irregularities may be formed on the surface of the negative electrode current collector to enhance the adhesion with the negative electrode active material. The negative electrode current collector may have various shapes, including a film, a sheet, a foil, a net, a porous body, a foam, a nonwoven web, or the like.

Particular examples of the negative electrode material include: carbon such as non-graphitizable carbon or graphite-based carbon; metal composite oxides, such as LiₓFe₂O₃ (0 ≤ x ≤ 1), LiₓWO₂ (0 ≤ x ≤ 1) and SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; or the like.

### Method for Manufacturing Cell for Secondary Battery

In another aspect of the present disclosure, there is provided a method for manufacturing a cell for a secondary battery, including the steps of:
(S1) stacking at least one positive electrode and at least one negative electrode alternately with a separator interposed therebetween to assemble a cell for a secondary battery; and
(S2) rolling the surface of the cell for a secondary battery at least once simultaneously with pressurization by using a roller,
wherein at least one separator includes a plurality of coated portions formed thereon while being spaced apart from one another by coating a mixture of a gas adsorbent and an adhesive binder on at least one surface of the separator.

According to the method for manufacturing a cell for a secondary battery of the present disclosure, a plurality of coated portions including a gas adsorbent are formed on the separator while being spaced apart from each other. Therefore, it is possible to adsorb the gases generated in the secondary battery and the gases not adsorbed by the gas adsorbent are discharged to the outside, thereby reducing the amount of gases trapped in the secondary battery.

Particularly, the method according to the present disclosure includes the steps of stacking a positive electrode, a negative electrode and a separator to obtain a cell for a secondary battery, and rolling the surface of the cell for a secondary battery at least once simultaneously with pressurization by using a roller. In this manner, it is easy to discharge the gases present in the secondary battery to the outside. As a result, the amount of gases trapped in the secondary battery can be reduced significantly.

Hereinafter, each step of the method for manufacturing a cell for a secondary battery according to the present disclosure will be explained in more detail.

The method for manufacturing a cell for a secondary battery according to the present disclosure includes step (S1) of stacking at least one positive electrode and at least one negative electrode alternately with a separator interposed therebetween to assemble a cell for a secondary battery.

Herein, at least one separator is provided with a plurality of coated portions formed thereon while being spaced apart from one another by coating a mixture of a gas adsorbent and an adhesive binder on at least one surface of the separator.

According to the present disclosure, the coated portions, i.e. the coated portion spaced apart from one another, may be formed by spray coating the mixture of the gas adsorbent and the adhesive binder. For example, a spray gun may be used to realize a spray coating process. When applying the mixture by using a spray gun, it is possible to control the mixture on one surface of the separator to a desired area and desired loading amount, and to apply the mixture uniformly on one surface of the separator, advantageously.

In addition, according to the present disclosure, the cell for a secondary battery includes a non-coated portion, which is not coated with the mixture of the gas adsorbent and the adhesive binder and from which the surface of the separator is partially exposed, on at least one surface of the separator. The non-coated portion may function as a gas discharge path through which the gases not adsorbed by the coated portions may be discharged to the outside of the secondary battery.

In the method for manufacturing a cell for a secondary battery according to the present disclosure, one or more separators provided with the coated portions are used to obtain a cell for a secondary battery. In addition, although the separator may be stacked at any position in the cell for a secondary battery, it is stacked preferably at a position having a difficulty in discharging gases.

Particularly, since the cell for a secondary battery has a stacked structure in which the separator and electrodes are laminated, it is more difficult for the central portion of the cell in the thickness direction to discharge gases, as compared to the outermost part. Therefore, the cell for a secondary battery may include the separator provided with the coated portion at the central portion in the thickness direction thereof in order to reduce the amount of gases trapped in the central portion of the cell for a secondary battery in the thickness direction. In addition, the cell for a secondary battery may include a separator provided with the coated portions in any position other than the central portion, together with the separator disposed at the central portion. For example, the term `central portion' may refer to the central portion of the cell when the cell is divided into three parts in the thickness direction thereof, or the central portion of the cell when the cell is divided into five parts in the thickness direction thereof.

In the method according to the present disclosure, any processes known to those skilled in the art as those for manufacturing a cell for a secondary battery may be used, after stacking at least one positive electrode and at least one negative electrode alternately with the separator interposed therebetween. For example, the positive electrode, the negative electrode and the separator stacked to assemble a secondary battery may be received in a battery casing, such as a pouch casing. Then, an electrolyte is injected to the battery casing so that the stacked positive electrode, negative electrode and separator may be wet with the electrolyte, and then the battery casing may be sealed. After that, an activation step of subjecting the assembled cell for a secondary battery to charge/discharge may be carried out.

Then, the method according to the present disclosure includes step (S2) of rolling the surface of the cell for a secondary battery at least once simultaneously with pressurization by using a roller. It is easy to discharge the gases generated in the cell for a secondary battery to the outside of the cell by rolling the surface of the cell for a secondary battery with a roller. The cell surface may be rolled, while being pressurized at the same time within a range of pressure optimized according to the size of the secondary battery, by using a roller. Particularly, the rolling may be carried out under a pressure of 10-50 kg load at a speed of 1-5 cm/sec in the longitudinal direction. Herein, the term 'longitudinal direction' refers to the longitudinal direction between a positive electrode lead and a negative electrode lead.

When the surface of the cell for a secondary battery is pressurized merely, for example, under a pressure of 0.5-5 kgf/cm², there is a problem in that the gases generated in the secondary battery are dissolved in the electrolyte, and the gases positioned at the central portion of the cell for a secondary battery are trapped and hardly discharged to the outside. However, according to the present disclosure, the surface of the cell for a secondary battery are pressurized and rolled at the same time, and thus the gases generated in the secondary battery are not dissolved in the electrode and are not trapped in the secondary battery, but are discharged to the outside with ease. Particularly, it is easy to discharge the gases in the direction (surface direction) in parallel with one surface of the separator provided with the coated portions in the cell for a secondary battery.

Moreover, according to the present disclosure, a gas adsorbent capable of adsorbing the gases is contained in the coated portions, and thus can adsorb the gases inside of the secondary battery. In addition, since the coated portions are spaced apart from each other, the gases in the secondary battery may be discharged to the outside with ease through the non-coated portion having no coated portions. Particularly, the non-coated portion may function as a gas discharge path, and thus it facilitates discharge of the gases in the secondary battery to the outside by rolling the surface of the cell with a roller.

Particularly, the method for manufacturing a cell for a secondary battery according to the present disclosure may include a step of rolling the surface of the assembled cell for a secondary battery twice simultaneously with pressurization by using a roller. For example, after carrying out rolling primarily, the method may include a step of subjecting the cell for a secondary battery to an aging step and carrying out rolling secondarily. In this case, in the primary rolling step, the gases in the secondary battery are discharged to the outside, and gases are further generated inside of the secondary battery during the aging step, but the gases generated during the aging step may be discharged to the outside by the secondary rolling step. In this manner, it is possible to further reduce the amount of the gases trapped in the secondary battery.

The aging step may be carried out at a temperature of 25-70°C for 0.5-72 days, but is not limited thereto.

According to the present disclosure, the method may further include a degassing step, after step (S2). The degassing step includes opening the battery casing to discharge gases and carrying out hot fusion of the gas discharge portion to seal the battery casing. According to the related art, after the secondary battery is assembled and subjected to charge/discharge, the degassing step is generally carried out to discharge the gases generated inside of the secondary battery.

However, according to the present disclosure, considering effective discharge of the gases, the method includes a step of rolling the surface of the cell for a secondary battery by using a roller to discharge the gases, before carrying out degassing and after carrying out charge/discharge. In this manner, it is possible to reduce the amount of the gases remaining in the cell for a secondary battery.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Examples

Each of Examples and Comparative Examples were prepared according to the method as described hereinafter.

### [Example 1]

### 1) Preparation of Separator

A separator was prepared by coating and drying a slurry on one surface of a polypropylene porous substrate (thickness 9 µm, porosity: 45%).

Herein, the slurry was prepared as follows. Polyvinylidene fluoride as a binder polymer was introduced to acetone as a solvent and dissolved therein at 50°C for about 4 hours to prepare a binder polymer solution. Alumina (Al₂O₃) (particle size: 500 nm) as inorganic particles were introduced to the binder polymer solution. Herein, the weight ratio of the inorganic particles and the binder polymer was controlled to 70:30 to prepare a slurry for forming a porous coating layer. The solid content (solid ingredients in the slurry except the solvent) in the slurry was 19 wt% based on 100 wt% of the slurry.

In addition, an acrylic dispersant, zeolite as a gas adsorbent and polyvinylidene fluoride (PVDF) as an adhesive binder were mixed in acetone as a solvent. The resultant mixture was applied onto the separator by using a spray gun, followed by drying. Based on the total weight of the mixture (on the solid content basis), the content of the dispersant was 1 wt%, that of zeolite was 40 wt%, and that of the adhesive binder was 15 wt%.

After the application, coating portions having a pattern of a plurality of dots (pattern of circles having a diameter of 3 mm and an interval of 5 mm) were formed, and the total area of the coated portions corresponded to 40% based on the total area of the separator.

### 2) Preparation of Positive Electrode and Negative Electrode

Li[Ni_{0.6}Mn_{0.2}Co_{0.2}]O₂ as a positive electrode active material, graphite as a conductive material and polyvinylidene fluoride (PVDF) as a binder were mixed at a weight ratio of 97:1.5:1.5 to prepare a slurry. The resultant slurry was coated on aluminum foil having a thickness of 20 µm, followed by drying and compression.

A mixture containing artificial graphite and natural graphite at a weight ratio of 5:5, as a negative electrode active material, Super C as a conductive material and SBR/CMC as a binder were mixed at a weight ratio of 98:1:1 to prepare a negative electrode slurry. The negative electrode slurry was applied to one surface of a copper current collector, followed by drying and compression, to obtain a negative electrode.

### 3) Manufacture of Lithium Secondary Battery

A cell for a secondary battery was manufactured by stacking the negative electrode and the positive electrode alternately with the separator interposed therebetween. Herein, both electrodes and the separator were stacked 10 times repeatedly in such a manner that a separator having coated portions, separator having no coated portion and a separator having coated portions might be disposed in the listed, thereby providing a cell for a secondary battery.

Then, primary rolling was carried out in the longitudinal direction under a pressure of 20 kg load at a speed of 2 cm/sec, primary aging (25°C, 24 hours) and secondary aging (60°C, 24 hours) were carried out, and then secondary rolling was carried out under the same condition as the primary rolling. After that, a degassing step was carried out.

### [Comparative Example 1]

A cell for a secondary battery was obtained in the same manner as Example 1, except that a separator having a coated portion formed totally on one surface thereof by using a bar coater was used, and the rolling steps were not carried out.

### [Comparative Example 2]

A cell for a secondary battery was obtained in the same manner as Example 1, except that the rolling steps were not carried out.

### [Comparative Example 3]

A cell for a secondary battery was obtained in the same manner as Example 1, except that a separator having coated portions formed in a mesh pattern on one surface thereof was used, and the rolling steps were not carried out. Herein, the mesh pattern was formed by carrying out coating with a line width of 3 mm and a line interval of 5 mm, and the area of the coated mesh pattern corresponded to 70% based on the area of one surface of the separator.

### Evaluation

### Determination of Trapped Gases (Air Scanner and Full Charge Disassembly Analysis)

Each of Example 1 and Comparative Examples 1-3 was observed in terms of the gases trapped therein through an air scanner (JAPAN PROBE Co., Model No. NAUT-SAT-S01).

In addition, it was shown that each cell was not charged to 100% due to the gases trapped therein but lithium deposition occurred, as determined by full discharge disassembly analysis of charging each cell to SOC 100, disassembling the cell and observing the cell by the naked eyes.

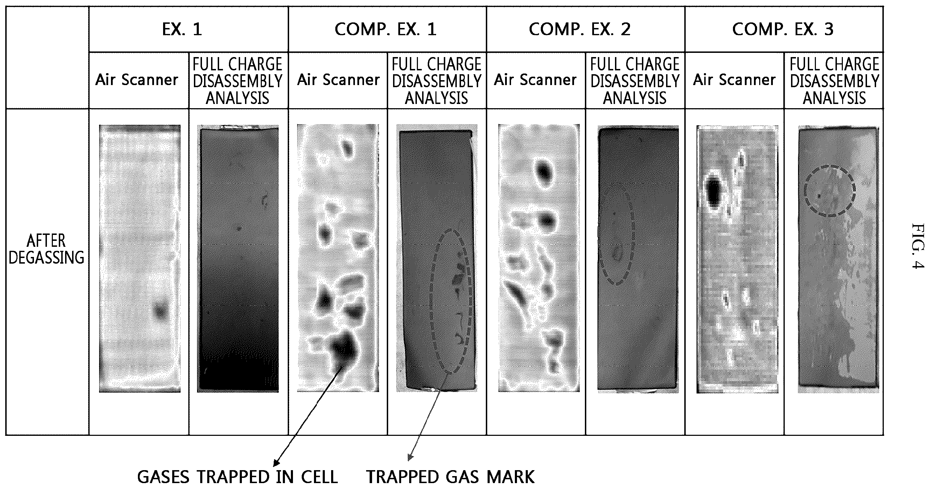

The results are shown in FIG. 4. In the case of Example 1, the amount of gases trapped in the cell is smaller as compared to Comparative Examples 1-3.

### Determination of Capacity (Discharge Capacity)

Each of the cells according to Example 1 and Comparative Examples 1-3 was charged/discharged at 25°C to determine the discharge capacity, and the capacity was evaluated based on the measurement of Comparative Example 1 as reference value (100%).

The evaluation results are shown in the following Table 1. It can be seen that each of the cells according to Comparative Examples 1-3 causes degradation of the capacity of the secondary battery due to the presence of gases trapped in the secondary battery, as compared to Example 1.
Charge condition: 0.33 C constant current-constant voltage (CC-CV)
Discharge condition: 0.33 C CC

### Direct Current Resistance (DCR)

Each of the cells according to Example 1 and Comparative Examples 1-3 was determined in terms of resistance. The resistance was evaluated based on the measurement of Comparative Example 1 as reference value (100%).

The evaluation results are shown in the following Table 1. It can be seen that each of the cells according to Comparative Examples 1-3 causes an increase in the resistance of the secondary battery due to the presence of gases trapped in the secondary battery, as compared to Example 1.

**[Table 1]**

| | Capacity (%) | DCR (%) |
|---|---|---|
| Example 1 | 103.2 | 98.18 |
| Comparative Example 1 | 100 | 100 |
| Comparative Example 2 | 98.9 | 103.5 |
| Comparative Example 3 | 97.1 | 104.1 |

### Electrochemical Impedance Spectroscopy (EIS)

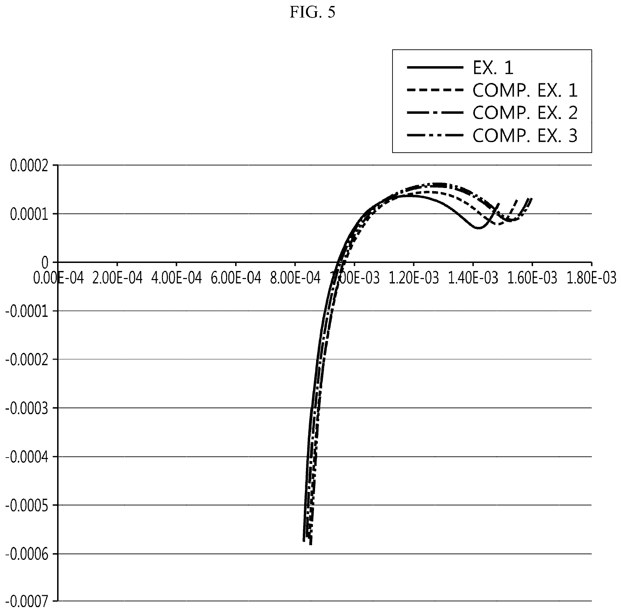

Each of the cells according to Example 1 and Comparative Examples 1-3 was charged to SOC 30 at 25°C and the resistance of each cell was determined by using electrochemical impedance spectroscopy (EIS). The results are shown in FIG. 5.

In the case of Example 1, it shows a smaller size of semi-circle (arc) formed at a value larger than 0, as compared to Comparative Examples 1-3. Therefore, it can be seen that Examples 1 shows a lower resistance value as compared to Comparative Examples 1-3.

## Claims

1. A cell for a secondary battery, comprising at least one negative electrode and at least one positive electrode stacked alternately with a separator interposed therebetween,
wherein at least one separator is provided with a plurality of coated portions formed on at least one surface thereof while being spaced apart from one another, and
the coated portion comprises a mixture of a gas adsorbent and an adhesive binder.

2. The cell for a secondary battery according to claim 1, wherein the gas adsorbent comprises a silica gel, a carbon fiber, a porous carbonaceous material, a porous metal oxide, a porous gel, a zeolite, or two or more of them.

3. The cell for a secondary battery according to claim 1, wherein the adhesive binder comprises polyvinylidene fluoride, styrene butadiene rubber, polytetrafluoroethylene, polyethylene glycol, polypropylene glycol, toluene diisocyanate, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, polyimide, or two or more of them.

4. The cell for a secondary battery according to claim 1, wherein the coated portions formed on at least one surface of the separator while being spaced apart from one another have a total area of 20-50% based on 100% of the total area of the surface of the separator.

5. The cell for a secondary battery according to claim 1, wherein the coated portions formed on at least one surface of the separator while being spaced apart from one another have an interval of 1-20 mm.

6. The cell for a secondary battery according to claim 1, wherein the separator provided with the coated portions is disposed at the central portion in the thickness direction of the cell for a secondary battery.

7. A method for manufacturing a cell for a secondary battery, comprising the steps of:
(S1) stacking at least one positive electrode and at least one negative electrode alternately with a separator interposed therebetween to assemble a cell for a secondary battery; and
(S2) rolling the surface of the cell for a secondary battery at least once simultaneously with pressurization by using a roller,
wherein at least one separator is provided with a plurality of coated portions formed thereon while being spaced apart from one another by coating a mixture of a gas adsorbent and an adhesive binder on at least one surface of the separator.

8. The method for manufacturing a cell for a secondary battery according to claim 7, wherein the coated portion is coated by spray coating the mixture of a gas adsorbent and an adhesive binder.

9. The method for manufacturing a cell for a secondary battery according to claim 7, wherein the gas adsorbent comprises a silica gel, a carbon fiber, a porous carbonaceous material, a porous metal oxide, a porous gel, a zeolite, or two or more of them.

10. The method for manufacturing a cell for a secondary battery according to claim 7, wherein the separator provided with the coated portions is disposed at the central portion in the thickness direction of the cell for a secondary battery.

11. The method for manufacturing a cell for a secondary battery according to claim 7, wherein step (S2) comprises:
primarily rolling the surface of the cell for a secondary battery simultaneously with pressurization by using a roller; and
aging the primarily rolled cell for a secondary battery, and then secondarily rolling the surface of the cell for a secondary battery simultaneously with pressurization by using a roller.

12. The method for manufacturing a cell for a secondary battery according to claim 7, which further comprises a degassing step after step (S2).
